# FASCICULE DE BREVET EUROPEEN

(11) **EP 1 870 005 B1**
(45) Date de publication et mention de la délivrance du brevet: **02.06.2010**
(21) Numéro de dépôt: 07290754.6
(22) Date de dépôt: 18.06.2007
(51) Int. Cl.: A47J 37/06

(54) **Appareil électroménager avec logement de rangement**
Elektrohaushaltsgerät mit Verstauungsfach
Household appliance with storage housing

(30) Priorité: 21.06.2006 FR 0605565
(43) Date de publication de la demande: 26.12.2007
(73) Titulaire: SEB SA, 69130 Ecully (FR)
(72) Inventeur: Moine, Olivier, 73100 Aix-les-Bains (FR); Gouthiere, Christophe, 74150 Rumilly (FR)
(74) Mandataire: Pichat, Thierry

(56) Documents cités:
- EP-A- 1 607 030

## Description

La présente invention concerne un appareil électroménager comprenant un logement de rangement pour des ustensiles culinaires qui y sont associés, un tel appareil pouvant être un grille-viande, un crêpier, un skillet...

On connaît un appareil électroménager du type transformable entre un état de fonctionnement et un état de rangement, comprenant, d'une part, une base qui forme le corps principal de l'appareil et qui comprend une face supérieure et une face inférieure dans laquelle est réalisé un logement de rangement pour des ustensiles culinaires, et, d'autre part, une plaque de cuisson adaptée à être montée, quand l'appareil électroménager est dans sa configuration de fonctionnement, de façon amovible, au-dessus de la face supérieure de la base, dans une position de cuisson permettant la cuisson d'un aliment y reposant. Un tel appareil, décrit dans la demande EP 1 607 030, présente l'inconvénient, quand l'appareil dans sa configuration de rangement est rangé sans être dans son emballage, de voir les ustensiles culinaires recouverts de poussière.

La présente invention vise à remédier à cet inconvénient.

Selon l'invention, quand l'appareil électroménager du type précité est dans sa configuration de rangement, la plaque de cuisson est adaptée à être disposée contre la face inférieure de la base de façon à former le couvercle du logement.

Ainsi, sans réaliser de pièce constitutive supplémentaire, les ustensiles culinaires sont protégés par la plaque de cuisson.

D'autres particularités et avantages apparaîtront dans la description du mode de réalisation donné à titre d'exemple non limitatif et illustré par les dessins annexés dans lesquels :
La figure 1 est une vue d'un côté longitudinal d'un appareil électroménager conforme à la présente invention, l'appareil étant représenté avec deux plaques de cuisson, l'une en position de cuisson et l'autre en position de couvercle ;
La figure 2 est une vue d'un côté transversal similaire à la figure 1 ;
La figure 3 est une vue en coupe longitudinale de l'appareil selon la figure 1 ; et
La figure 4 est une vue en coupe transversale de l'appareil selon la figure 2.

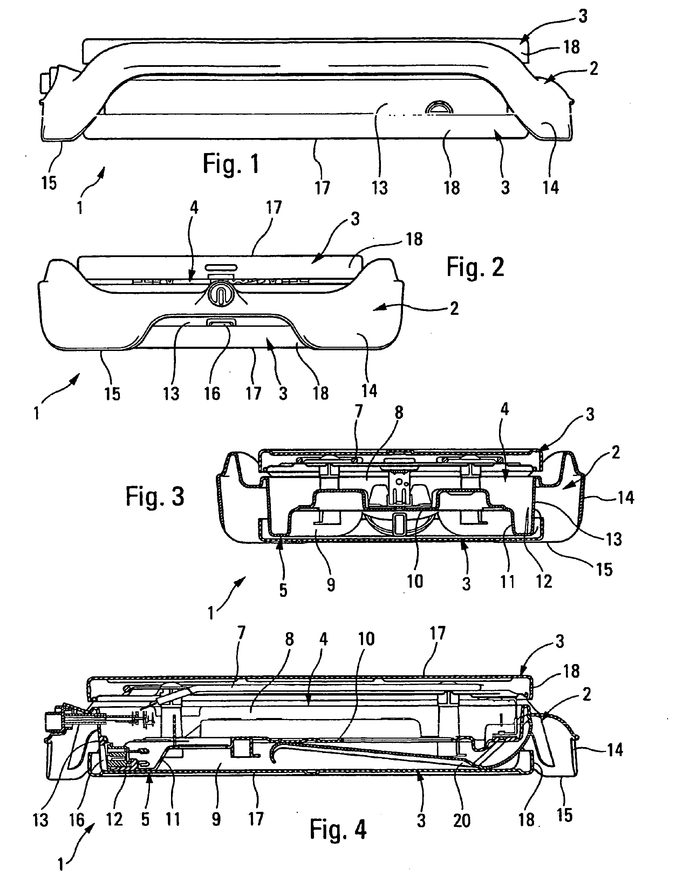

Comme on peut le voir aux figures 1 à 4, un appareil électroménager 1 (en l'occurrence un crêpier électrique) comprend une base 2 qui forme le corps principal de l'appareil 1 et une plaque de cuisson 3 adaptée à cuire un aliment. La base 2 comprend une face supérieure 4, une face inférieure 5 située à l'opposé de la face supérieure 4 et faisant face au support sur lequel repose l'appareil électroménager 1 en état de fonctionnement. L'appareil électroménager 1 comprend également un dispositif électrique qui comprend une résistance électrique de chauffe 7 disposée au niveau de la face supérieure 4 de la base 2 et adaptée à fournir l'énergie nécessaire à la cuisson d'un aliment reposant sur la plaque de cuisson 3. Comme on peut le voir aux figures 3 et 4, la résistance électrique de chauffe 7 disposée au niveau d'une cavité 8 qui est réalisée dans la face supérieure 4 de la base 2. De préférence l'appareil électroménager est du type à avoir, en fonctionnement, une seule plaque de cuisson, tel qu'un barbecue de table, un skillet...

La plaque de cuisson 3 est séparable de la base 2, et l'appareil électroménager 1 est transformable entre, d'une part, son état de fonctionnement dans lequel la plaque de cuisson 3 est montée au-dessus de la face supérieure 4 et de la résistance électrique de chauffe 7 dans une position de cuisson, et, d'autre part, un état de rangement dans laquelle la plaque de cuisson 3 est retirée de cet emplacement.

Un logement de rangement 9 pour des ustensiles culinaires 20 (tels que des spatules, un répartiteur de pâte ou une louche 20) est réalisé dans la face inférieure 5 de la base 2. Le logement de rangement 9 est délimité par une paroi de fond 10 qui est sensiblement parallèle à la face inférieure 5 de la base 2 et par des parois latérales 11 qui sont sensiblement perpendiculaires à la paroi de fond 10 et qui s'étendent de cette paroi 10 à la face inférieure 5. Dans le présent mode de réalisation, le logement de rangement 9 a la forme d'un parallélépipède rectangle. Le logement de rangement 9 est bordé par un rebord périphérique 12 qui forme la paroi de la face inférieure 5 de la base 2, et jusqu'auquel s'étendent les parois latérales 11 du logement de rangement 9. En outre, le logement de rangement 9 comprend des organes de fixation permettant la fixation des ustensiles culinaires 20.

La base 2 comprend des parois latérales internes 13 qui s'étendent depuis la face supérieure 4 jusqu'à la face inférieure 5 (et plus précisément, jusqu'au rebord périphérique 12). Ces parois latérales internes 13 sont sensiblement verticales et sensiblement parallèles aux parois latérales 11 du logement de rangement 9. Les parois internes 13 s'étendant sur toute la périphérie de l'appareil électroménager 1.

La base 2 comprend des parois latérales externes 14 qui s'étendent depuis la face supérieure 4 jusqu'à un niveau inférieur à la face inférieure 5 (et plus précisément, qui s'étendent vers le bas, au-delà du rebord périphérique 12) de sorte que leurs extrémités inférieures libres 15 forment les pieds de la base 2. Ces parois latérales externes 14 ne sont présentes qu'au niveau des arrêtes verticales de l'appareil électroménager 1.

Comme on peut le voir aux figures 2 et 4, la base 2 (plus précisément, une des parois latérales internes 13, à un endroit non recouvert par une paroi latérale externe 14 - au milieu de la paroi latérale interne) comprend une fiche femelle 16 permettant le raccordement électrique de la résistance électrique de chauffe 7 à une source extérieure d'électricité, et adaptée à coopérer avec un cordon d'alimentation prévu à cet effet.

La plaque de cuisson 3 comprend, d'une part, une surface de cuisson 17 dont la face supérieure (quand la plaque 3 est dans sa position de cuisson) est adaptée à recevoir l'aliment à cuire et, d'autre part, un rebord périphérique 18 bordant cette surface de cuisson 17 et s'étendant verticalement vers le bas (quand la plaque 3 est dans sa position de cuisson).

Quand l'appareil électroménager 1 est dans sa configuration de rangement, la plaque de cuisson 3 est adaptée à être disposée contre la face inférieure 5 de la base 2 de façon à former le couvercle du logement de rangement 9. De ce fait, les ustensiles culinaires 20 sont protégés de l'extérieur, comme s'ils étaient rangés dans un logement muni d'un couvercle spécifique.

De plus, la plaque de cuisson 3 comprend des moyens d'immobilisation qui sont adaptés à coopérer avec des moyens complémentaires d'immobilisation portés par la base 2 de façon à permettre l'immobilisation de la plaque de cuisson 3 par rapport au logement de rangement 9 quand elle en forme le couvercle. De ce fait, la plaque de cuisson 3 et la base 2 sont solidarisées l'une à l'autre, ce qui facilite les manipulations. Cette caractéristique permet également d'améliorer la protection des ustensiles culinaires 20, et d'éviter l'oubli de la plaque de cuisson (voire des articles culinaires 20 si le logement ne comprend pas de moyens de fixation) lors du déplacement de la base 2. Dans le présent mode de réalisation, les moyens d'immobilisation sont formés par le rebord périphérique 18 de la plaque de cuisson 3, et les moyens complémentaires d'immobilisation sont formés par la portion inférieure des parois latérales internes 13 de la base 2, l'immobilisation se faisant par l'enfichage du couvercle 3 par rapport à la face inférieure 5 de la base 2.

Par ailleurs, comme on peut le voir aux figures 2 et 4, la plaque de cuisson 3 (ici son rebord périphérique 18) est conformée de façon à obturer partiellement la fiche femelle 16 quand elle est dans sa position de couvercle. Ainsi, quand la plaque de cuisson 3 est dans sa position de couvercle, le rebord périphérique 18 recouvre partiellement la fiche femelle 16, ce qui rend impossible l'enfichage du cordon d'alimentation et l'alimenter par inadvertance la résistance électrique de chauffe 7.

Dans le présent exemple, étant donné que le rebord périphérique 18 de la plaque de cuisson 3 est un rebord tombant (s'étendant vers le bas), la plaque de cuisson 3 est adaptée à former le couvercle du logement de rangement 9 quand elle est dans une position retournée.

D'autres modes de réalisation sont possibles. Ainsi, les moyens d'immobilisation pourraient être formés par un rebord de la plaque de cuisson orienté vers le haut. Il serait aussi possible que les moyens complémentaires d'immobilisation soient formés par les parois latérales 11 du logement de rangement 9. De plus, l'appareil pourrait comprendre deux plaques de cuisson (par exemple, une lisse - pour la cuisson d'oeufs ou de crêpes, et une striée - pour la cuisson de viandes), l'une étant en position d'utilisation pendant que l'autre est en position de rangement.

## Revendications

1. Appareil électroménager (1) transformable entre un état de fonctionnement et un état de rangement, comprenant, d'une part, une base (2) qui forme le corps principal de l'appareil (1) et qui comprend une face supérieure (4) et une face inférieure (5) dans laquelle est réalisé un logement de rangement (9) pour des ustensile culinaires, et, d'autre part, une plaque de cuisson (3) adaptée à être montée, quand l'appareil électroménager (1) est dans son état de fonctionnement, de façon amovible, au-dessus de la face supérieure (4) de la base (2), dans une position de cuisson permettant la cuisson d'un aliment, **caractérisé en ce que**, quand l'appareil électroménager (1) est dans son état de rangement, la plaque de cuisson (3) est adaptée à être disposée contre la face inférieure (5) de la base (2) de façon à former le couvercle du logement de rangement (9).

2. Appareil électroménager (1) selon la revendication 1, **caractérisé en ce que** la plaque de cuisson (3) est adaptée à former le couvercle du logement de rangement (9) quand elle est dans une position retournée.

3. Appareil électroménager (1) selon la revendication 1 ou 2, **caractérisé en ce que** la plaque de cuisson (3) comprend des moyens d'immobilisation adaptés à coopérer avec des moyens complémentaires d'immobilisation portés par la base (2) de façon à permettre l'immobilisation de la plaque de cuisson (3) dans sa position de couvercle.

4. Appareil électroménager (1) selon la revendication 3, **caractérisé en ce que** la plaque de cuisson (3) comprend une surface de cuisson (17) adaptée à recevoir l'aliment à cuire et un rebord périphérique (18) bordant cette surface de cuisson (17) et formant les moyens d'immobilisation.

5. Appareil électroménager (1) selon la revendication 3 ou 4, **caractérisé en ce que** la base (2) comprend des parois latérales internes (13) s'étendant depuis la face supérieure (4) jusqu'à la face inférieure (5) et formant les moyens complémentaires d'immobilisation.

6. Appareil électroménager (1) selon l'une des revendications 1 à 5, **caractérisé en ce qu'**il comprend un dispositif électrique comprenant une résistance électrique de chauffe (7) disposée au niveau de la face supérieure (4) de la base (2) et adaptée à fournir l'énergie nécessaire à la cuisson de l'aliment reposant sur la plaque de cuisson (3), la base (2) comprenant une fiche femelle (16) qui permet le raccordement électrique de la résistance électrique de chauffe (7) à une source extérieure d'électricité et qui est au moins partiellement obturée par la plaque de cuisson (3) en position de couvercle.

7. Appareil électroménager (1) selon la revendication 6 dépendante des revendications 4 et 5, **caractérisé en ce que** la fiche femelle (16) est réalisée dans une des parois latérales internes (13), le rebord périphérique (18) de la plaque de cuisson (3) étant adapté à la recouvrir au moins partiellement quand la plaque (3) est dans sa position de couvercle.

## Claims

1. Household appliance (1) which can be transformed between a functioning state and a storage state, comprising, on the one hand, a base (2) which forms the main body of the appliance (1) and which comprises an upper side (4) and a lower side (5) in which a storage housing (9) is formed for culinary utensils, and, on the other hand, a cooking plate (3) designed to be mounted when the household appliance (1) is in its functioning state, in a movable fashion, above the upper side (4) of the base (2) in a cooking position allowing the cooking of a foodstuff, **characterised in that** when the household appliance (1) is in its storage state, the cooking plate (3) is designed to be arranged against the lower side (5) of the base (2) so as to form the cover of the storage housing (9).

2. Household appliance (1) according to claim 1, **characterised in that** the cooking plate (3) is designed to form the cover of the storage housing (9) when it is in a returned position.

3. Household appliance (1) according to claim 1 or 2, **characterised in that** the cooking plate (3) comprises locking means designed to cooperate with complimentary locking means supported by the base (2) so as to permit the locking of the cooking plate (3) in its cover position.

4. Household appliance (1) according to claim 3, **characterised in that** the cooking plate (3) comprises a cooking surface (17) designed to receive the food to be cooked and a peripheral edge (18) bordering said cooking surface (17) and forming the locking means.

5. Household appliance (1) according to claim 3 or 4, **characterised in that** the base (2) comprises internal lateral walls (13) extending from the upper side (4) up to the lower side (5) and forming complementary locking means.

6. Household appliance (1) according to one of claims 1 to 5, **characterised in that** it comprises an electrical device with an electrical heating resistor (7) arranged at the level of the upper side (4) of the base (2) and adapted to provide the power necessary for cooking the food resting on the cooking plate (3), the base (2) comprising a female socket (16) which enables the electrical connection of the electrical heating resistor (7) to an external source of electricity and which is at least partially closed by the cooking plate (3) in its cover position.

7. Household appliance (1) according to claim 6 dependent on claims 4 and 5, **characterised in that** the female socket (16) is formed in one of the internal lateral walls (13), the peripheral edge (18) of the cooking plate (3) being designed to cover it at least partially when the plate (3) is in its cover position.

## Patentansprüche

1. Elektrohaushaltsgerät (1), das zwischen einem Betriebszustand und einem Verstauungszustand umwandelbar ist, umfassend zum Einen eine Basis (2), die den Hauptkörper des Gerätes (1) bildet und eine Oberseite (4) sowie eine Unterseite (5) aufweist, in der eine Ablage (9) für Kochutensilien gebildet ist, und zum Anderen eine Kochplatte (3) zum beweglichen Anbringen oberhalb der Oberseite (4) der Basis (2) in einer Kochposition zum Kochen von Nahrungsmittel, wenn das Elektrohaushaltsgerät (1) in dessen Betriebszustand ist, **dadurch gekennzeichnet, dass**, wenn das Elektrohaushaltsgerät (1) in seinem Verstauungszustand ist, die Kochplatte (3) an der Unterseite (5) der Basis (2) angeordnet sein kann, um den Deckel der Ablage (9) zu bilden.

2. Elektrohaushaltsgerät (1) nach Anspruch 1, **dadurch gekennzeichnet, dass** die Kochplatte (3) dazu geeignet ist, den Deckel der Ablage (9) zu bilden, wenn sie sich in einer umgedrehten Position befindet.

3. Elektrohaushaltsgerät (1) nach Anspruch 1 oder 2, **dadurch gekennzeichnet, dass** die Kochplatte (3) Fixiereinrichtungen umfasst zum Zusammenwirken mit komplementären, an der Basis (2) angebrachten Fixiereinrichtungen, so dass ein Fixieren der Kochplatte (3) in deren Position als Deckel möglich ist.

4. Elektrohaushaltsgerät (1) nach Anspruch 3, **dadurch gekennzeichnet, dass** die Kochplatte (3) eine Kochfläche (17) zur Aufnahme des zu kochenden Nahrungsmittels sowie einen Außenrand (18) umfasst, der die Kochfläche (17) begrenzt und die Fixiereinrichtungen bildet.

5. Elektrohaushaltsgerät (1) nach Anspruch 3 oder 4, **dadurch gekennzeichnet, dass** die Basis (2) interne Seitenwände (13) umfasst, die sich von der Oberseite (4) bis zur Unterseite (5) erstrecken und die komplementären Fixiereinrichtungen bilden.

6. Elektrohaushaltsgerät (1) nach einem der Ansprüche 1 bis 5, **dadurch gekennzeichnet, dass** es eine elektrische Einrichtung umfasst mit einem elektrischen Heizwiderstand (7), der auf der Höhe der Oberseite (4) der Basis (2) angeordnet ist und dazu geeignet ist, die zum Kochen des auf der Kochplatte (3) ruhenden Nahrungsmittels erforderliche Energie zu liefern, wobei die Basis (2) eine Buchse (16) umfasst zum elektrischen Anschluss des elektrischen Heizwiderstandes (7) an eine externe Stromquelle, welche Buchse zumindest teilweise durch die Kochplatte (3) in ihrer Position als Deckel verdeckt ist.

7. Elektrohaushaltsgerät (1) nach dem von den Ansprüchen 4 und 5 abhängenden Anspruch 6, **dadurch gekennzeichnet, dass** die Buchse (16) in einer der seitlichen Innenwände (13) ausgebildet ist, wobei der Außenrand (18) der Kochplatte (3) dazu geeignet ist, diese zumindest teilweise zu überdecken, wenn sich die Platte (3) in ihrer Position als Deckel befindet.
